(19) Europäisches Patentamt / European Patent Office / Office européen des brevets

(11) **EP 1 682 791 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**31.10.2012 Patentblatt 2012/44**

(45) Hinweis auf die Patenterteilung:
**27.02.2008 Patentblatt 2008/09**

(21) Anmeldenummer: **04791046.8**

(22) Anmeldetag: **29.10.2004**

(51) Int Cl.:
***F16D 65/12*** *(2006.01)*

(86) Internationale Anmeldenummer:
**PCT/EP2004/012287**

(87) Internationale Veröffentlichungsnummer:
**WO 2005/045273 (19.05.2005 Gazette 2005/20)**

(54) **BREMSSCHEIBE, INSBESONDERE FÜR EIN SCHIENENFAHRZEUG**

BRAKE DISK, ESPECIALLY FOR A RAIL VEHICLE

DISQUE DE FREIN, EN PARTICULIER POUR UN VEHICULE SUR RAILS

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.11.2003 DE 10351592**

(43) Veröffentlichungstag der Anmeldung:
**26.07.2006 Patentblatt 2006/30**

(73) Patentinhaber: **KNORR-BREMSE Systeme für Schienenfahrzeuge GmbH 80809 München (DE)**

(72) Erfinder:
• **WIRTH, Xaver 85737 Ismaning (DE)**
• **MOSBACH, Christian 82110 Germering (DE)**

(74) Vertreter: **Specht, Peter et al Loesenbeck - Specht - Dantz Patent- und Rechtsanwälte Am Zwinger 2 33602 Bielefeld (DE)**

(56) Entgegenhaltungen:
| EP-A- 0 159 639 | EP-A- 0 644 349 |
| WO-A1-01/96758 | DE-A1- 1 530 241 |
| DE-A1- 3 814 614 | DE-C2- 10 047 980 |
| DE-T2- 69 705 007 | |

EP 1 682 791 B2

**Beschreibung**

Die vorliegende Erfindung betrifft eine Schienenfahrzeug-Bremsscheibe, gemäß dem Oberbegriff des Anspruchs 1, wie sie z.B. aus der WO 01/96758 A1 bekannt ist.

Derartige Bremsscheiben, die als sogenannte Wellenbremsscheiben zum Einsatz kommen, unterliegen während des Betriebs erheblichen mechanischen und thermischen Beanspruchungen, die besondere konstruktive Maßnahmen erfordern, um zum einen die notwendige Sicherheit zu garantieren und zum anderen eine halbwegs praktikable Montage bzw. Demontage zum Zwecke des Auswechselns zu ermöglichen.

Da sich die Reibringe durch die beim Bremsen auftretende Erwärmung ausdehnen, reicht bspw. eine einfache Zentrierung durch einen zylindrischen Sitz auf den Naben von Wellenbremsscheiben, vor allem bei zweiteiligen Hochleistungsbremsscheiben, nicht aus. Es ist daher bekannt, an der Nabe Gleitelemente in Form von Gleitsteinen zu befestigen, die in Radialnuten des jeweiligen Reibringes geführt sind, so daß der Reibring sich zwar radial ausdehnen kann, die Zentrierung durch die seitliche Fixierung des Gleitsteines in der Radialnut jedoch erhalten bleibt. Dies trifft gleichermaßen auf Radbremsscheiben zu, bei denen die Reibringe beidseitig an einer Radscheibe mittels Gleitsteinen zentriert und verdrehsicher gehalten werden.

Durch die Gleitsteine wird somit verhindert, daß durch das anliegende Bremsmoment oder durch dynamische Stöße eine Radialverschiebung des jeweiligen Reibringes erfolgt, wodurch sich eine unzulässige Unwucht ergeben kann.

Darüber hinaus können Reibringe aus duktilen Werkstoffen, beispielsweise Stahl, durch Plastifizierungsvorgänge in den Reibflächen, verursacht durch hohe Bremsleistungen und hohe Temperaturen, im Betriebseinsatz schrumpfen. In diesem Fall sind die Reibringe zum Auswechseln nicht mehr problemlos von der Nabe zu lösen.

Auch um dies zu verhindern, werden die Gleitsteine eingesetzt, so daß der Reibring, wie erwähnt, sich konzentrisch ausdehnen bzw. schrumpfen kann, wobei hierfür das zylindrische Spiel zwischen der Reibscheibe und der Nabe entsprechend groß ausgebildet ist.

Der Einsatz solcher Gleitsteine bei Radbremsscheiben ist beispielsweise aus der EP 0 683 331 B1, der EP 0 589 408 B1, der EP 0 644 349 B1, der DE 197 27 333 C2 sowie der DE 100 47 980 C2 bekannt.

Prinzipiell hat sich die darin gezeigte und beschriebene Lösung der geschilderten Probleme mittels Gleitsteinen bewährt. Allerdings ist die Realisierung dieser Verbindungen nur mit einem relativ hohen Fertigungsaufwand möglich, der einer kostenoptimierten Herstellung entgegensteht.

Darüber hinaus kommt nur eine recht geringe Anzahl von Gleitsteinen zum Einsatz, üblicherweise drei bis sechs, die aufgrund der notwendigen Lastaufnahme entsprechend groß dimensioniert sind und von daher einen hohen Platzbedarf benötigen. Daneben ist durch die bekannte Anordnung und Ausbildung der Gleitsteine eine ungleichmäßige Lastübertragung mit den sich daraus ergebenden Beanspruchungen zu beklagen.

Die übliche Breitendimensionierung der Gleitsteine (etwa 15 - 60 mm) führt dazu, daß durch auftretende Temperaturunterschiede beim Betrieb der Bremsscheibe eine Spielvergrößerung der Gleitführung, also der Radialnuten, auftritt. Dieser Temperaturunterschied zwischen Radialnut und Gleitstein kann bei Reibringen mehrere 100° C betragen. Beispielhaft sei eine Nutbreite $b_N$ = 20 mm und eine Temperaturdifferenz $\Delta T$ = 200 K angenommen. Es ergibt sich:

$$\Delta b = b \cdot \alpha_{th} \cdot \Delta T \ 20 \cdot 10^{-5} \cdot 200 \ K = 0{,}04 \ mm.$$

Dieser Wert erscheint gering, bedeutet jedoch bei Reibringmassen von ca. 100 kg (mittlere Größe) eine Unwucht von U = m·e = 4 gm (e = Exzentrizität).
Dieser Wert beträgt bereits mehr als die Hälfte der zulässigen Unwucht bei Hochgeschwindigkeitsbremsscheiben.

Wie bereits erwähnt, ist die Herstellung der Radialnuten und der Gleitsteine sehr kostenintensiv, insbesondere durch die notwendige spangebende Fertigung.

Der vorliegenden Erfindung liegt daher die Aufgabe zugrunde, eine Bremsscheibe der gattungsgemäßen Art so weiter zu entwickeln, daß ihre Funktionssicherheit verbessert und eine kostengünstigere Herstellung möglich wird.

Diese Aufgabe wird durch eine Bremsscheibe gelöst, die die Merkmale des Anspruchs 1 aufweist.

Die Erfindung ermöglicht zuerst einmal statt einiger weniger Gleitelementführungen eine größere Anzahl von sozusagen Miniaturgleitelmentführungen, durch die beispielsweise die zum Stand der Technik beschriebenen Nachteile hinsichtlich unterschiedlicher Ausdehnungen der Gleitelemente und der Radialnuten mit den daraus sich ergebenden Folgen verhindert werden. Insoweit bietet die Erfindung eine bemerkenswerte Verbesserung der Betriebssicherheit, insbesondere, da in diesem Zusammenhang keine nennenswerten Unwuchten entstehen.

Auch die Herstellung der Bremsscheibe wird durch die Erfindung einfacher und somit kostengünstiger. Wenn überhaupt, so sind die aus einem Halbzeug oder Normteil hergestellten Gleitelemente mit geringem Aufwand zu fertigen, d. h., zu bearbeiten. Dies gilt gleichermaßen für die Einbringung der Radialnuten in den Reibring, die mit sehr geringem Aufwand herzustellen sind.

Nach der Erfindung ist vorgesehen, daß jeder Klemmschraube, mit der der Reibring an der Nabe befestigt ist, eine Radialnut und ein eingreifender Führungsstift zugeordnet ist, wobei die jeweilige Radialnut sich ausgehend von der Durchgangsbohrung zur Durchführung der Durchgangsschraube nach außen oder nach innen zur Mittelachse hin erstreckt. In jedem Fall ist die Einbringung der Radialnut in diesem Bereich besonders einfach.

Durch die kleine Dimensionierung der die Gleitelemente bildenden Führungsstifte, insbesondere hinsichtlich des Querschnittsabmaßes, und einer damit einhergehenden Spielverringerung bei Erwärmung zwischen dem Führungsstift und der Radialnut, wird eine verbesserte Zentrierwirkung erzielt.

Während das zum Stand der Technik genannte, durch Temperaturunterschiede bedingte Spiel beispielsweise 0,04 mm beträgt, bei einer Nutbreite von 20 mm, reduziert sich dieses Spiel bei einem eingesetzten Führungsstift und einer Breite der Radialnut von 5-10 mm auf 0,01 - 0,02 mm, so daß sich die Zentriergüte mehr als verdoppelt. -

Die Führungsstifte werden zweckmäßigerweise in Bohrungen der Nabe bei einer Wellenbremsscheibe eingesetzt, die ebenfalls entsprechend klein gehalten sind, so daß trotz der größeren Anzahl die Materialschwächung gering und die Festigkeit des Bauteils gesteigert wird. Dies ist besonders wichtig bei Bremsscheiben, bei denen die Aufnahmebohrungen direkt am Radsteg eingebracht sind.

Die nunmehr mögliche größere Anzahl von einen Formschluß bildenden Gleitelementen im Zusammenwirken mit den Radialnuten erlaubt eine gleichmäßigere Übertragung des Bremsmomentes vom Reibring auf die Nabe bzw. der Radscheibe. Die höhere Anzahl der Reibringanbindungen ermöglicht auch die Übertragung eines höheren Bremsmomentes, wobei die Anzahl der Führungsstifte von dem Bremsmomentanteil abhängt, der durch einen Formschluß übertragen werden soll.

Je nach Zahl von Verbindungslaschen des Reibringes bzw. der Verschraubungen ist die Anordnung der Führungsstifte zu wählen, bevorzugt jedoch symmetrisch aufgeteilt, d., h., 3, 6, 9, 12 Führungsstifte am Umfang verteilt.

Ein dynamisch hoch belastbarer Formschluß zwischen den Gleitelementen und den Radialnuten ergibt sich dann, wenn die Gleitelemente, d. h. die Führungsstifte im Anlagebereich an der Seitenwandung der Radialnuten flächig ausgebildet sind. Dadurch kann auf einen Kontaktsitz des Reibringes auf der Nabe verzichtet werden, mit dem Effekt, daß selbst bei geschrumpftem Reibring eine problemlose Demontage möglich ist.

Durch die hohe Redundanz, die sich aus der relativ großen Anzahl von Formschlußverbindungen ergibt, ist eine erhöhte Sicherheit des Formschlusses insgesamt gewährleistet, was sich insbesondere bei einer möglichen fehlerhaften Montage als erwähnenswerter Vorteil darstellt.

Der geringe notwendige Platzbedarf zur Unterbringung der Gleitelemente einerseits und zur Einbringung der Radialnuten andererseits erlaubt den Einsatz dieser Formschlußverbindungen bei nahe zu allen Scheibenbauarten.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

Figur 1          einen Teilausschnitt einer erfindungsgemäßen Bremsscheibe in einem geschnittenen Längsschnitt,

Figur 2          einen Schnitt durch die Bremsscheibe nach Figur 1 entsprechend der Linie II-II in Figur 1,

Figur 3          ein weiteres Ausführungsbeispiel einer Bremsscheibe in einem im Längsschnitt dargestellten Teilausschnitt,

Figur 4          einen Schnitt durch die Bremsscheibe nach Figur 3 entsprechend der Linie IV-IV in Figur 3,

Figuren 5 und 6      weitere nicht erfindungsgemaße jeweils in einer Ansicht entsprechend den Schnitten II-II bzw. IV-IV,

Figur 7          mehrere Ausführungsbeispiele einer Einzelheit der Bremsscheibe jeweils in perspektivischer Ansicht.

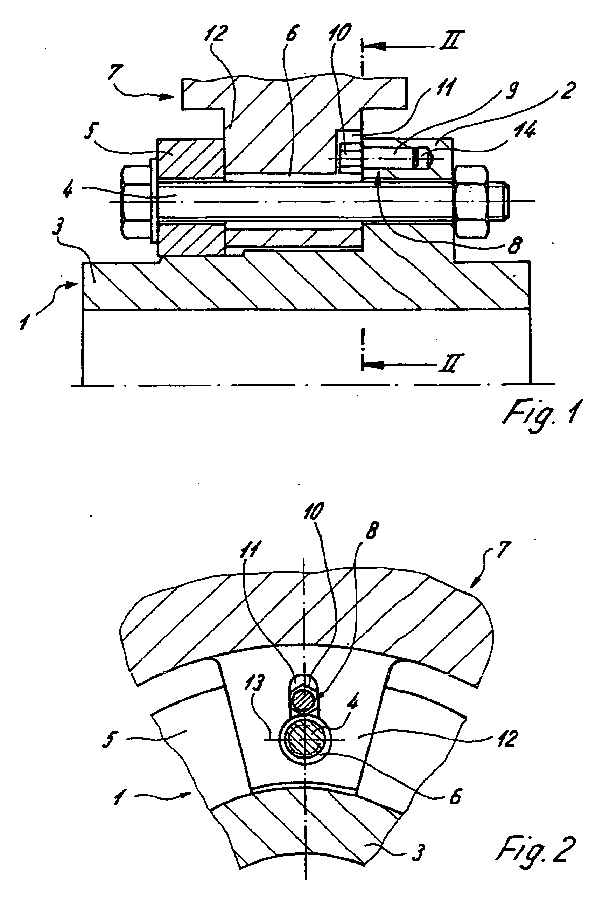

In den Figuren 1 bis 6 ist die Bremsscheibe einer Wellenbremsscheibe dargestellt, die in ihrem Grundaufbau jeweils aus einer Nabe 1, mit einem sich axial erstreckenden Nabenkörper 3 und einem umlaufenden, radial dazu sich erstreckenden Nabenflansch 2 sowie einem Reibring 7, der mittels Klemmschrauben 4 an der Nabe 1 befestigt ist, besteht.

Dazu sind die Klemmschrauben 4 durch einen dem Nabenflansch 2 gegenüber liegend angeordneten Klemmring 5, durch eine jeder Klemmschraube 4 zugeordnete Verbindungslasche 12 des Reibringes 7 sowie durch den Nabenflansch 2 geführt, wobei die Verbindungslasche 12 zur Durchführung der Klemmschraube 4 eine Durchgangsbohrung 6 aufweist und zwischen dem Klemmring 5 und dem Nabenflansch 2 eingeklemmt ist.

Im Bereich jeder Durchgangsbohrung 6 ist eine Radialnut 11 im Verbindungsflansch 12 vorgesehen, die sich bei dem in Figur 1 gezeigten Ausführungsbeispiel, ausgehend von der Durchgangsbohrung 6 nach außen hin erstreckt, bezogen auf einen Teilkreisdurchmesser 13, auf dem symmetrisch verteilt die Klemmschrauben 4 bzw. die Durchgangsbohrungen 6 angeordnet sind.

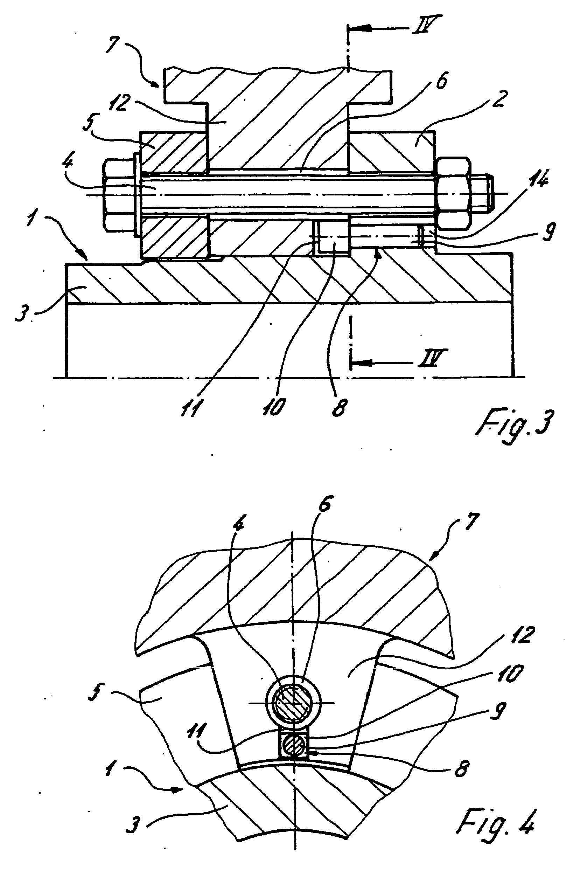

Im Ausführungsbeispiel gemäß den Figuren 3 und 4 erstreckt sich die jeweilige Radialnut 11, ebenfalls ausgehend von der Durchgangsbohrung 6, nach innen zur Mittellängsachse der Nabe 1 hin gerichtet.

In der Radialnut 11 ist ein Gleitelement 8 in Form eines Führungsstiftes geführt, der in einer Einsteckbohrung 14 des Nabenflansches 2, achsparallel zur Klemmschraube 4, mit seinem Schaft 9 axial gesichert einliegt.

An seinem freien Ende ist ein Kopf 10 angeformt, der bevorzugt im Querschnitt die Form eines Mehrkants, vorzugsweise eines Vier- oder Sechskants aufweist und zumindest zwei sich gegenüber liegende parallele Seiten besitzt, die an den zugeordneten Seitenwänden der Radialnut 11 anliegen.

Eine temperaturbedingte radiale Ausdehnung der Reibscheibe 7 ist daher problemlos möglich, auch weil die Durchgangsbohrung 6 der Verbindungslasche 12 gegenüber dem Schaft der Klemmschraube 4 ein entsprechendes Übermaß aufweist, so daß auch hier ein ausreichendes Spiel vorhanden ist. Aufgrund des Eingriffs der Gleitelemente 8 in die Radialnuten 11 ist in jedem Fall eine Zentrierung der Reibscheibe 7 garantiert.

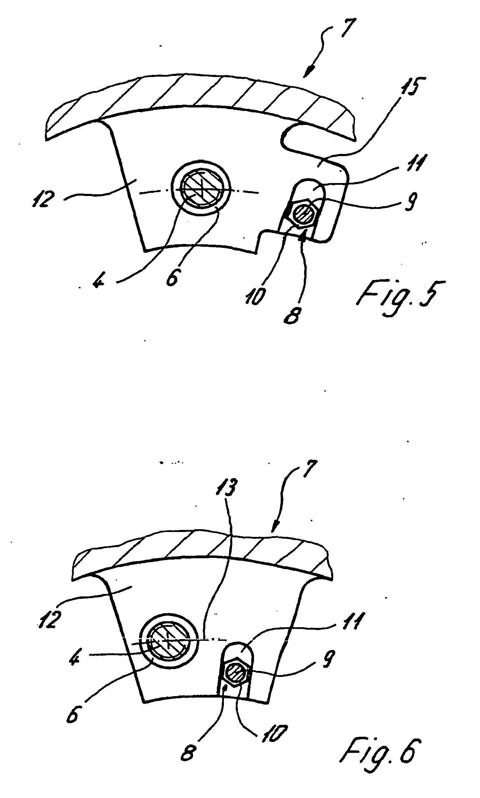

In den Figuren 5 und 6 ist dargestellt, daß die Radialnut 11 außerhalb der Durchgangsbohrung 6, ausgehend von der der Nabe 1 zugewandten Seite angeordnet ist. Dabei ist die Radialnut 11, nach Figur 5 in eine an den Verbindungsflansch 12 seitlich angeformte Lasche 15 eingebracht, die abständig zur Nabe 1 endet und die eine besonders einfache Montage des Gleitelementes ermöglicht.

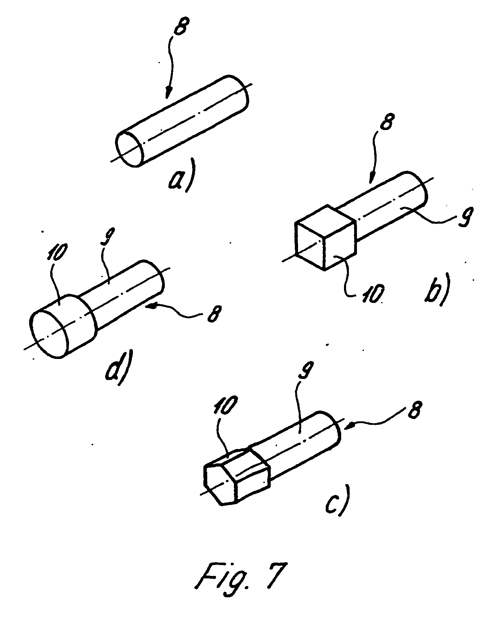

Die Ausbildung der Gleitelemente als Führungsstifte ist beispielhaft in der Figur 7 wiedergegeben.

Unter a) ist die einfachste Form eines solchen Gleitelementes als Zylinderstift gezeigt. Hierzu kann beispielsweise ein Normteil Verwendung finden. Das mit b) bezeichnete Beispiel eines Gleitelementes entspricht dem in den Figuren 3 und 4, wobei sich an einen zylindrischen Schaft 9 ein Vierkant-Kopf anschließt, der in der jeweiligen radialen Nut der Reibscheibe 7 einliegt.

Dies ist ebenfalls bei dem mit c) bezeichneten Gleitelement der Fall, bei dem der in der Radialnut 11 einliegende Kopf 10 den Querschnitt eines Sechskants aufweist. Der Kopf 10 des Beispiels d) ist als Zylinder ausgebildet ebenso wie dessen Schaft 9.

Die Gleitelemente b), c) und d) können aus einem Halbzeug hergestellt werden, beispielsweise aus einem Vierkant-, Sechskant-oder Rundstahl, an den der zylindrische Schaft 9 angedreht ist.

Prinzipiell sind durchaus auch andere geeignete Normteile oder entsprechend zu bearbeitende Halbzeuge verwendbar.

## <u>Bezugszeichenliste</u>

1   Nabe
2   Nabenflansch
3   Nabenkörper
4   Klemmschraube
5   Klemmring
6   Durchgangsbohrung
7   Reibring
8   Gleitelement
9   Schaft
10  Kopf
11  Radialnut
12  Verbindungsflansch
13  Teilkreisdurchmesser
14  Einsteckbohrung
15  Lasche

## Patentansprüche

1. Schienenfahrzeug-Bremsscheibe, mit mindestens einem, mit Radialnuten (11) versehenen Reibring (7), der mittels Klemmschrauben (4) an einer auf einer Welle festlegbaren Nabe (1) befestigt ist, wobei zur Verdrehsicherung und zur Zentrierung des Reibringes (7) in den Radialnuten-(1 11) mit der Nabe (1) verbundene Gleitelemente (8) geführt sind, wobei jedes Gleitelement (8) als ein aus einem Halbzeug oder Normteil hergestellter, sich mit seinem Schaft (9) achsparallel zur Klemmschraube (4) erstreckender Führungsstift ausgebildet ist, wobei jede Radialnut (11) sich ausgehend von einer Durchgangsbohrung (6) des Reibringes (7), die von der Klemmschraube (4) durchtreten ist, nach außen oder nach innen, zur Mittellängsachse der Nabe (1) hin erstreckt, und jedes Gleitelement (8) in einer Einsteckbohrung (14) der Nabe 1, vorzugsweise einem Nabenflansch 2 angeordnet ist, und jedes Gleitelement (8) einen Kopf (10) aufweist, der in der zugeordneten Radialnut (11) geführt ist, **dadurch gekennzeichnet, daß** jede Radialnut < oder = etwa 10mm breit ist, und das Gleitelement (8) als Zylinderstift ausgebildet ist.

2. Bremsscheibe nach einem der vorhergehenden Ansprüche, **dadurch gekennzeichnet, daß** der Kopf (10) jedes Gleitelementes (8) als Mehrkant ausgebildet ist, vorzugsweise als Vier- oder Sechskant.

3. Bremsscheibe nach einem der vorhergehenden Ansprüche, **dadurch gekennzeichnet, daß** der Kopf (10) jedes Gleitelementes (8) zwei parallel zueinander verlaufende Seiten aufweist, die an den Seitenwänden der jeweils zugeordneten Radialnut (11) anliegen.

4. Bremsscheibe nach einem der vorhergehenden Ansprüche, **dadurch gekennzeichnet, daß** jedes Gleitelement (8) mit einem Mehrkantkopf aus einem Mehrkant-Stahl gefertigt ist, wobei ein zylindrischer Schaft (9) spanend angeformt ist.

5. Bremsscheibe nach einem der vorhergehenden Ansprüche, **dadurch gekennzeichnet, daß** die Gleitelemente (8) symmetrisch über den Umfang verteilt angeordnet sind.

6. Bremsscheibe nach einem der vorhergehenden Ansprüche, **dadurch gekennzeichnet, daß** 3, 6, 9 oder 12 Gleitelemente (8) vorgesehen sind.

7. Bremsscheibe nach einem der vorhergehenden Ansprüche, **dadurch gekennzeichnet, daß** mehr als 6 Gleitelemente (8) vorgesehen sind.

8. Bremsscheibe nach einem der vorhergehenden Ansprüche, **dadurch gekennzeichnet, daß** die Anzahl der Gleitelemente (8) der Anzahl der Klemmschrauben (4) entspricht.

## Claims

1. Rail-vehicle brake disc, comprising at least one friction ring (7) provided with radial grooves (11), which is fastened, by means of clamping screws (4), on a hub (1) suitable for fastening on a shaft, wherein sliding elements (8) connected to said hub (1) are guided in said radial grooves (1 11) for locking said friction ring (7) against rotation and for centring same, wherein each sliding element (8) is configured as a guiding pin made of a semi-finished product or as standard part and extending, by its shaft (9), in parallel with the axis of said clamping screw (4), wherein, starting out from a through-hole (6) of said friction ring (7) through which said clamping screw (4) passes, each radial groove (11) extends outwards or inwards towards the central longitudinal axis of said hub (1), and each sliding element (8) is disposed in a plug-in bore (14) of said hub (1), preferably a hub flange (2), and each sliding element (8) has a head (10) that is guided in the associated radial groove (11), **characterised in that** each radial groove is less than or roughly 10 mm wide, and said sliding element (8) is configured as cylindrical pin.

2. Brake disc according to any of the preceding Claims, **characterised in that** the head (10) of each sliding element (8) is configured as polygonal element, preferably as square or hexagonal element.

3. Brake disc according to any of the preceding Claims, **characterised in that** said head (10) of each sliding element (8) comprises two sides extending in parallel to each other which bear against the side walls of the respective associated radial groove (11).

4. Brake disc according to any of the preceding Claims, **characterised in that** each sliding element (8) is made with a polygonal head made of a polygonal steel, with a cylindrical shaft (9) being formed thereon by a metal-cutting process.

5. Brake disc according to any of the preceding Claims, **characterised in that** said sliding elements (8) are symmetrically distributed along the periphery.

6. Brake disc according to any of the preceding Claims, **characterised in that** 3, 6, 9 or 12 sliding elements (8) are provided.

**7.** Brake disc according to any of the preceding Claims, **characterised in that** more than 6 sliding elements (8) are provided.

**8.** Brake disc according to any of the preceding Claims, **characterised in that** the number of said sliding elements (8) corresponds to the number of said clamping screws (4).

**Revendications**

**1.** Disque de frein de véhicule sur rails, comprenant au moins un anneau de friction ( 7 ) muni de rainures radiales ( 1 ) et fixé, à l'aide d'une vis de serrage ( 4 ), à un moyeu ( 1 ) apte à être fixé à un arbre, dans lequel des éléments glissants ( 8 ) reliés au moyeu ( 1 ) sont guidés dans les rainures radiales (111 ) afin de bloquer en rotation l'anneau de friction ( 7 ) et de le centrer, dans lequel chaque élément glissant ( 8 ) est configuré sous forme d'une goupille de guidage faite en un demi-produit ou d'une pièce normalisée qui s'étend, par sa tige ( 9 ), parallèlement à l'axe de la vis de serrage ( 4 ), dans lequel, à partir d'un perçage traversant ( 6 ) de l'anneau de friction ( 7 ), dans lequel passe la vis de serrage ( 4 ), chaque rainure radiale ( 11 ) s'étend, vers l'extérieur ou vers l'intérieur, vers l'axe longitudinal médian du moyeu ( 1 ), et chaque élément glissant ( 8 ) est disposé dans un perçage d'insertion ( 14 ) du moyeu ( 1 ), de préférence une bride de moyeu ( 2 ), et chaque élément glissant ( 8 ) a une tête ( 10 ), qui est guidée dans la rainure radiale ( 11 ) qui lui est affectée, **caractérisé en ce que** chaque rainure radiale a une largeur inférieure ou égale à peu près à 10 mm et l'élément glissant ( 8 ) est configuré sous forme d'une goupille cylindrique.

**2.** Disque de frein selon l'une quelconque des revendications précédentes, **caractérisé en ce que** la tête ( 10 ) de chaque élément glissant ( 8 ) est configurée sous forme d'un élément polygonal, de préférence sous forme d'un élément à quatre pans ou à six pans.

**3.** Disque de frein selon l'une quelconque des revendications précédentes, **caractérisé en ce que** la tête ( 10 ) de chaque élément glissant ( 8 ) comprend deux côtés s'étendant l'un en parallèle à l'autre, qui portent contre les parois latérales de la rainure radiale ( 11 )respective qui leur est affectée.

**4.** Disque de frein selon l'une quelconque des revendications précédentes, **caractérisé en ce que** chaque élément glissant ( 8 ) est produit en ayant une tête à plusieurs pans en acier à plusieurs pans, une tige cylindrique ( 9 ) y étant formée par un procédé d'usinage avec enlèvement de copeaux.

**5.** Disque de frein selon l'une quelconque des revendications précédentes, **caractérisé en ce que** les éléments glissants ( 8 ) sont distribués en symétrie sur le pourtour.

**6.** Disque de frein selon une quelconque des revendications précédentes, **caractérisé en ce qu'**il est prévu 3, 6, 9 ou 12 éléments glissants ( 8 ).

**7.** Disque de frein selon l'une quelconque des revendications précédentes, **caractérisé en ce qu'**il est prévu plus de 6 éléments glissants ( 8 ).

**8.** Disque de frein selon l'une quelconque des revendications précédentes, **caractérisé en ce que** le nombre des éléments glissants ( 8 ) correspond au nombre des vis de serrage ( 4 ).

Fig. 1

Fig. 2

*Fig. 3*

*Fig. 4*

Fig. 5

Fig. 6

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0196758 A1
- EP 0683331 B1
- EP 0589408 B1
- EP 0644349 B1
- DE 19727333 C2
- DE 10047980 C2